# FASCICULE DE BREVET EUROPEEN

(11) **EP 3 357 146 B1**
(45) Date de publication et mention de la délivrance du brevet: **09.10.2024**
(21) Numéro de dépôt: 16787490.8
(22) Date de dépôt: 26.09.2016
(51) Int. Cl.: H02K 5/20

(54) **MACHINE ELECTRIQUE TOURNANTE REFROIDIE PAR UN FLUIDE CALOPORTEUR**
DURCH EINE WÄRMETRANSFERFLÜSSIGKEIT GEKÜHLTE ELEKTRISCHE DREHMASCHINE
ROTARY ELECTRIC MACHINE COOLED BY A HEAT-TRANSFER FLUID

(30) Priorité: 30.09.2015 FR 1559248
(43) Date de publication de la demande: 08.08.2018
(73) Titulaire: Valeo Electrification, 95800 Cergy (FR)
(72) Inventeur: HANQUEZ, Michaël, 94046 Créteil Cedex (FR); GERVAIS, Hugues, 94046 Créteil Cedex (FR); LEROY, Virginie, 94046 Créteil Cedex (FR); LE DOUARIN, Michel, 94046 Créteil Cedex (FR)
(74) Mandataire: Valeo Powertrain Systems
(86) Numéro de dépôt international: PCT/FR2016/052442
(87) Numéro de publication internationale: WO 2017/055725

## Description

### Domaine de l'invention

La présente invention concerne une machine électrique tournante refroidie par un fluide caloporteur.

La machine électrique pourra être un moteur électrique, tel qu'un moteur électrique appartenant à un véhicule automobile hybride, un alternateur permettant d'alimenter des consommateurs et de recharger une batterie ou un alternateur réversible -appelé alterno-démarreur- permettant au moins de redémarrer un moteur thermique notamment après un arrêt au feu rouge du véhicule automobile. La machine électrique pourra appartenir à un véhicule électrique.

### Etat de la technique

Ainsi qu'on le sait une machine électrique tournante comporte un carter en matière moulable, tel qu'un carter en aluminium, un stator externe doté d'un corps, tel qu'un corps en forme de paquet de tôle, portant un bobinage de stator, un rotor interne solidaire d'un arbre de rotor monté à rotation dans le carter.

Le carter comporte au moins un flasque avant et un flasque arrière. Ce carter de forme creuse sert de logement au rotor interne, tel qu'un rotor à aimants permanents, à griffes ou à pôles saillants. Ce carter porte à sa périphérie externe le corps du stator externe monté notamment par frettage dans le carter.

Le carter est également configuré centralement pour porter au moins un moyen de palier, tel qu'un roulement à billes, de montage à rotation de l'arbre du rotor.

Le bobinage du stator pourra être du type multiphasé, notamment du type triphasé, traversant le corps du stator et s'étendant en saillie de part et d'autre du corps du stator pour former des chignons.

Ce bobinage comporte au moins un enroulement par phase. Les extrémités des enroulements pourront être reliées en étoile, comme visible par exemple à la figure 1 du document EP 0831 580, ou en triangle. Ces extrémités pourront être reliées à un pont redresseur, comme décrit par exemple dans le document WO 02/093717, ou à un onduleur comme décrit par exemple dans les documents EP 0831 580 et FR 2 745 444. Pour plus de précisions on se reportera à ces documents.

La machine s'échauffe lorsqu'elle fonctionne. Il importe donc de bien refroidir celle-ci, notamment le stator de celle-ci pour augmenter ses performances.

A cet effet, de manière conventionnelle, la machine est refroidie par ventilation interne, les flasques avant et arrière étant ajourés à cet effet, tandis que le rotor porte au moins un ventilateur pour faire circuler l'air à l'intérieur du carter. Pour plus de précisions on se reportera par exemple au document WO 02/093717 précité.

On recherche toujours à augmenter la puissance de la machine électrique de sorte qu'il faut augmenter encore le refroidissement de celle-ci.

Pour ce faire on a déjà proposé de refroidir la machine à l'aide d'un fluide caloporteur, tel que le liquide de refroidissement du moteur thermique du véhicule automobile, le dit fluide circulant dans une chambre de refroidissement ménagée dans le carter de la machine.

Une tel solution est visible à la figure 1, qui une vue en coupe axiale correspondant à la partie haute de la figure 13 du document FR 2 782 356 auquel on se reportera pour plus de précisions.

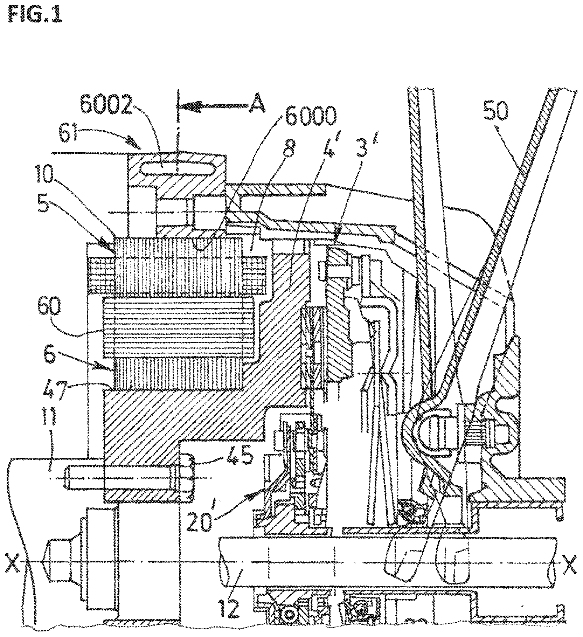

Dans la figure 1, on voit que le corps 10 cylindrique du stator 5 externe est monté par frettage à la périphérie interne 6000 de l'entretoise 61 et que le plateau de réaction 4' présente un dégagement à sa périphérie externe pour ne pas interférer avec le chignon 8 du bobinage du stator 5. Le plateau de réaction 4' présente également un autre dégagement pour ne pas interférer avec la cage d'écureuil 60 que comporte le rotor interne 6. Cette cage 60 est portée par le corps, que comporte le rotor interne 6. Le corps du rotor 6 est emmanché sur la périphérie externe 47 de la rallonge du plateau de réaction 4'comportant une creusure pour logement d'une partie de l'amortisseur de torsion 20' de l'embrayage, ici un embrayage à diaphragme commandé par une fourchette de débrayage 50. La friction 20' comporte un moyeu solidaire en rotation de l'arbre 12 de la boîte de vitesse du véhicule. L'axe X-X de des arbres 11 et 12 constitue l'axe de rotation de la machine. Dans cette figure 1 les corps cylindriques du stator 5 et du rotor 6 sont en forme de paquet de tôle, le corps 10 du stator 5 comportant des dents pour porter le bobinage du stator. Un entrefer existe entre la périphérie

interne du corps 10 du stator 5 et la périphérie externe du corps du rotor 6.

La chambre 6002, également appelée poche à eau, est dans un mode de réalisation de forme cylindrique. Des tubulures portées par l'entretoise 61 sont prévues pour alimenter la chambre 6002 avec présence d'un séparateur entre l'arrivée et l'évacuation du fluide caloporteur (voir figures 14 et 15 du document FR 2 782 356). Il est également prévu un bouchon de vidange dans la partie basse de l'entretoise.

La chambre est obtenue par moulage avec présence de sable formant un noyau que l'on évacue après moulage. Pour ce faire l'entretoise est dotée de moyens d'évacuation du sable comme visible à la figure 14 du document FR 2 782 356.

Cette disposition donne satisfaction.

Néanmoins il serait souhaitable de diminuer le taux de rebus et donc de diminuer les coûts. En effet à cause du sable lors de la fabrication de la chambre des porosités ou des mouvements peuvent se produire. Ces porosités ou mouvements peuvent conduire à des fuites suite au montage du corps du stator dans l'entretoise. Certes on peut récupérer certains assemblages entretoise-stator en injectant de la résine mais cela augmente les coûts En outre il peut être souhaitable de diminuer l'épaisseur de la paroi interne de la chambre, qui présente au moins une épaisseur de 4 mm et qui limite le diamètre externe du corps du stator au détriment de la puissance de la machine.

De plus il est souhaitable d'avoir dans tous les cas une étanchéité fiable et durable sans avoir à faire des reprises.

Les documents US 2015/069862 A1 (BULATOW MICHAEL [DE]) et WO 2014/199516 A1 (MITSUBISHI ELECTRIC CORP [JP]) divulguent des machines électriques de l'art antérieur.

### Objet de l'invention

La présente invention a pour objet de répondre à ces souhaits.

Suivant l'invention une machine électrique tournante est décrite dans les revendications.

Grâce à l'invention pour un même diamètre interne de la paroi externe on peut augmenter le diamètre externe du corps du stator, la paroi interne en acier pouvant avoir une épaisseur inférieure à 4 mm, par exemple de l'ordre de 1 à 1,5 mm La puissance de la machine peut être ainsi augmentée.

On réduit les rebus et on diminue les coûts car le montage de la paroi interne en acier permet d'éviter d'avoir recours à un moulage avec un noyau de sable pour obtenir la chambre. On diminue les contraintes au niveau de la paroi externe, qui pourra être brute. En outre l'acier conduit bien la chaleur et la zone de montage pourra avoir un diamètre externe inférieur à celui des zones d'accostage pour déterminer de manière ajustable le volume de la chambre en combinaison avec la paroi externe en vis à vis.

De plus l'étanchéité de la chambre est fiable puisque l'on peut monter la pièce en acier par enfilage axiale dans la paroi externe, le joint de la deuxième zone d'accostage de plus faible diamètre étant ménagé puisqu'il est destiné à coopérer en fin de course avec la deuxième portée, la deuxième zone d'accostage ayant un diamètre externe inférieur à celui du diamètre interne de la paroi externe.

On appréciera, d'une part, que l'on puisse aisément obtenir la paroi externe et les deux portées par démoulage axial et d'autre part, que l'on puisse obtenir le volume souhaité de la chambre en jouant sur les diamètres de la zone de montage et des zone d'accostages.

La pièce en acier pourra être obtenue par conformage d'une tôle d'acier, telle qu'une tôle d'acier fine d'épaisseur égale ou inférieure par définition à 3 mm selon la norme NF EN 10130 de 2006. Ainsi on pourra utiliser une tôle d'acier à haute formabilité, telle qu'une tôle d'acier laminée à froid du type DC 04 selon la norme NF EN 10130. On pourra découper dans cette tôle un cercle puis, par emboutissage profond, on étire la matière de cette tôle pour former un tube, dont on déforme ensuite les extrémités par augmentation de diamètre pour former les zones d'accostage. On pourra utiliser des molettes pour former les zones d'accostage et un dispositif à poinçon et matrice pour étirer le métal.

En variante on fait appel à un tube en acier de faible épaisseur dont on déforme et conforme en final les extrémités pour former les zones d'accostage par exemple à l'aide de molettes.

En variante la paroi interne pourra être réalisée par emboutissage d'une plaque de tôle en acier suivie d'une opération de roulage et soudage du fait que la paroi interne est en acier.

La tôle d'acier pourra comporter un revêtement pour résister à la corrosion. On pourra utiliser par exemple une tôle d'acier revêtue d'une couche de Zinc par exemple de 10 microns, telle qu'une tôle d'acier DC 04 ZE. En variante on utilise une tôle en acier inoxydable. De même on pourra traiter la paroi externe, par exemple en aluminium, pour qu'elle résiste à la corrosion.

Selon un aspect de l'invention, la chambre appartient au flasque avant en forme de pot à jupe périphérique fermée par un couvercle globalement de forme plate constituant le flasque arrière et dans laquelle la paroi externe appartient à la jupe du flasque avant étagée intérieurement en diamètre pour former la périphérie interne de la paroi externe et les portée.

Suivant d'autres caractéristiques prises isolément ou en combinaison :
- le fluide caloporteur est le liquide de refroidissement du moteur thermique du véhicule automobile ;
- le fluide caloporteur est de l'huile ;
- le fluide caloporteur est de l'air ;
- le carter est en aluminium ;
- le carter est en fonte ;
- le carter comporte au moins une autre partie en acier ;
- le carter comporte un flasque avant et un flasque arrière, la paroi externe de la chambre appartenant à l'un des flasques avant ou arrière ;
- la paroi externe de la chambre appartient à une entretoise du carter intercalée à fixation entre le flasque avant et le flasque arrière du carter;
- le carter est étanche ;
- le carter est fermé ;
- les extrémités axiales du carter comportent des ouvertures pour circulation de l'air à l'intérieur du carter et refroidissement mixte de la machine ;
- les portées ont une longueur axiale supérieure à celle de leur zone d'accostage associée ;
- les zones d'accostage présentent chacune une rainure de réception d'un joint ;
- les joints des zones d'accostage sont des joints plats ;
- les joints des zones d'accostage sont des joints toriques ;
- l'un des joints est un joint plat et l'autre joint un joint torique ;
- les joints sont identiques et ont le même diamètre externe, le joint associé à la première zone d'accostage étant plus étiré que le joint associé à la deuxième zone d'accostage ;
- les joints ont des diamètres externes différents,
- les zones d'accostage ont la même longueur axiale ;
- les zones d'accostage ont des longueurs axiales différentes ;
- la zone de montage comporte une nervure saillante radialement en direction de la paroi externe pour séparer l'entrée et l'évacuation du fluide caloporteur ;
- la nervure est d'orientation axiale ;
- la nervure est inclinée axialement ;
- la zone de montage est dépourvue de nervure saillante pour séparer l'entrée et l'évacuation du fluide caloporteur ;
- la première zone d'accostage est prolongée extérieurement à son extrémité libre par un rebord de fixation d'orientation transversale saillant vers l'extérieur et destiné à être fixé à un épaulement transversal délimitant l'extrémité libre de la première portée de la partie concernée du carter ;
- l'épaulement appartient à un supplément externe de matière que présente la partie concernée du carter ;
- l'épaulement est continu ;
- l'épaulement est fragmenté ;
- le rebord de fixation consiste en une pluralité de pattes ;
- les pattes sont trouées pour leur fixation à l'épaulement à l'aide d'organes de fixation, tels que des vis vissées dans des trous taraudés du supplément externe de matière ;
- la zone de montage de la pièce en acier est une zone de frettage du corps du stator ;
- la zone de montage de la pièce en acier est une zone de soudage du corps du stator ;
- la zone de montage du corps du stator est une zone de réception d'une résine thermo conductrice intercalée radialement entre le corps du stator et la zone de montage ;
- la machine électrique tournante est un moteur électrique ;
- la machine électrique tournante est une machine de forte puissance destinée à équiper un véhicule hybride réalisant plusieurs fonctions ou un véhicule électrique ;
- la machine électrique tournante est un alternateur ;
- la machine électrique tournante est un alterno-démarreur ;
- le rotor de la machine est un rotor à aimants permanents ;
- le rotor de la machine est un rotor à griffes ;
- le rotor de la machine est un rotor à pôles saillants ;
- le stator de la machine comporte un bobinage de stator à bobines concentriques ;
- le stator comporte un bobinage de stator du type ondulé ;
- le corps de stator est segmenté.

Notamment les extrémités axiales du carter sont fermées pour formation d'un carter étanche. Avantageusement les extrémités axiales du carter sont dotées d'ouvertures pour un refroidissement mixte de la machine.

Notamment le carter comporte une entretoise intercalée entre un flasque avant et un flasque arrière et dans laquelle la chambre appartient à l'entretoise.

La pièce d'acier peut être obtenue par formage d'une tôle d'acier fine à haute déformabilité, telle qu'une tôle d'acier DC 04.

La tôle d'acier, telle qu'une tôle d'acier DC 04 ZE, est notamment revêtue d'une fine couche anti corrosion.

Le cas échéant le fluide caloporteur est le liquide de refroidissement d'un moteur thermique d'un véhicule automobile.

Notamment la zone de montage de la pièce en acier est une zone de frettage du corps du stator.

D'autres avantages apparaîtront à la lecture de la description qui va suivre de manière non limitative et ce en regard des dessins annexés

### Brève description des dessins

- la figure 1 est une vue en coupe axiale partielle d'une machine électrique tournante de l'art antérieur;
- la figure 2 est une vue en coupe axiale d'une machine électrique tournante selon l'invention dotée d'une chambre de refroidissement à paroi externe et paroi interne sous la forme d'une pièce d'acier ;
- la figure 3 est une vue partielle à plus grande échelle de la partie droite de la machine de la figure 2;
- la figure 4 est une vue de dessus à échelle différente de la pièce en acier des figures 2 et 3;
- la figure 5 est une vue de détail correspondante à l'encart E de la figure 4 pour montrer à grande échelle la rainure de réception du joint d'étanchéité d'une zone d'accostage ;
- la figure 6 est une vue en perspective de la pièce en acier des figures 2 et 4 pour montrer la nervure de séparation de l'entrée et de l'évacuation du fluide caloporteur ;
- la figure 7 est une vue de face de la figure 6 pour montrer les pattes de fixation saillantes vers l'extérieur de l'extrémité libre de la pièce d'acier.

Dans les figures les éléments identiques ou similaires seront affectés des mêmes signes de référence.

### Descriptions d'exemples de réalisation de l'invention

### Premier mode de réalisation

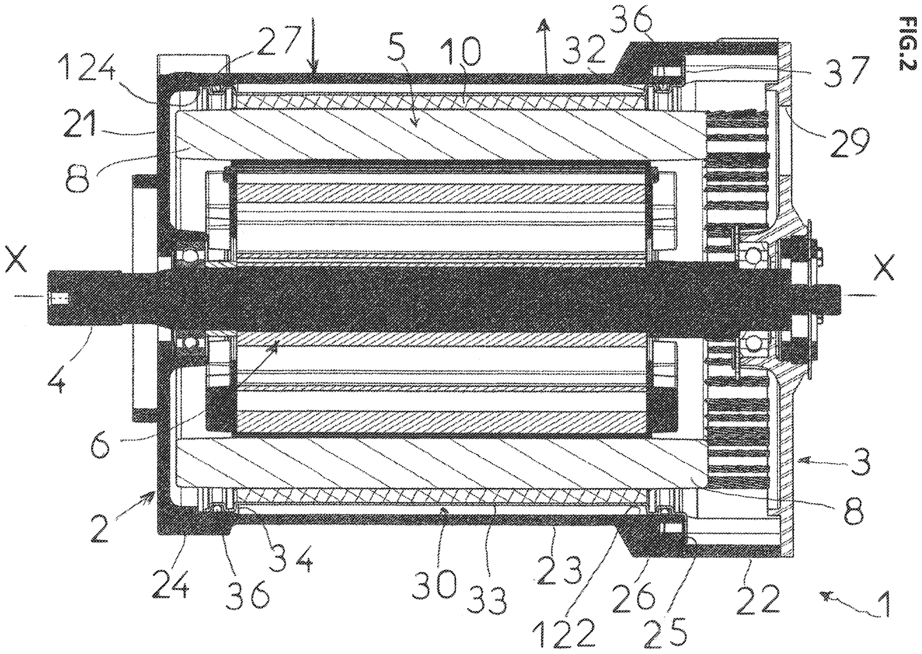

Dans cette réalisation des figures 1 à 7, la machine électrique tournante 1 comporte un carter 2,3 en matière moulable, ici un carter en aluminium, un stator externe 5 doté corps 10 en forme de paquet de tôle, portant un bobinage de stator de préférence multiphasé, un rotor interne 6 solidaire d'un arbre de rotor 4 monté à rotation dans le carter 2,3. Le rotor 6 comporte également un corps en forme de paquet de tôles non référencé à la figure 2.

L'axe X-X (figure 2) de l'arbre 4 constitue l'axe de rotation de la machine 1. Dans la suite de la description les orientations radiale, axiale et transversale seront faites en référence à cet axe. De même en considérant la figure 2 une orientation d'avant en arrière correspond à une orientation de bas en haut. Le rotor 6 et le stator 5 sont montés de manière coaxiale par rapport à l'axe X-X, un entrefer existant entre la périphérie interne du corps 10 du stator 5 et la périphérie externe du corps du rotor 6. Les corps du rotor 6 et du stator 5 sont globalement de forme annulaire.

Le carter 2,3 (figure 2) comporte dans ce mode de réalisation un flasque avant 2 et un flasque arrière 3 appelés également palier avant et palier arrière. Ces flasques 2, 3 sont en matière moulable, ici en aluminium. Ils sont obtenus par moulage. Le carter 2, 3 de forme creuse sert de logement au rotor interne 6 ici sous la forme d'un rotor à aimants permanents (non référencés à la figure 2) portés par le corps du rotor 6. Le corps du rotor 6 pourra être fixé à l'arbre 4, de manière connue, par emmanchement à force de l'arbre 4 dans l'alésage interne du corps du rotor 6.

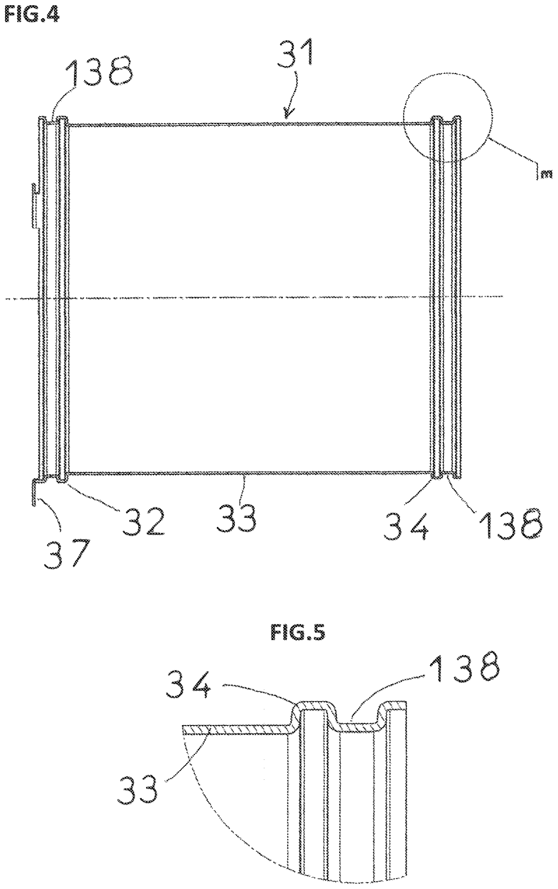

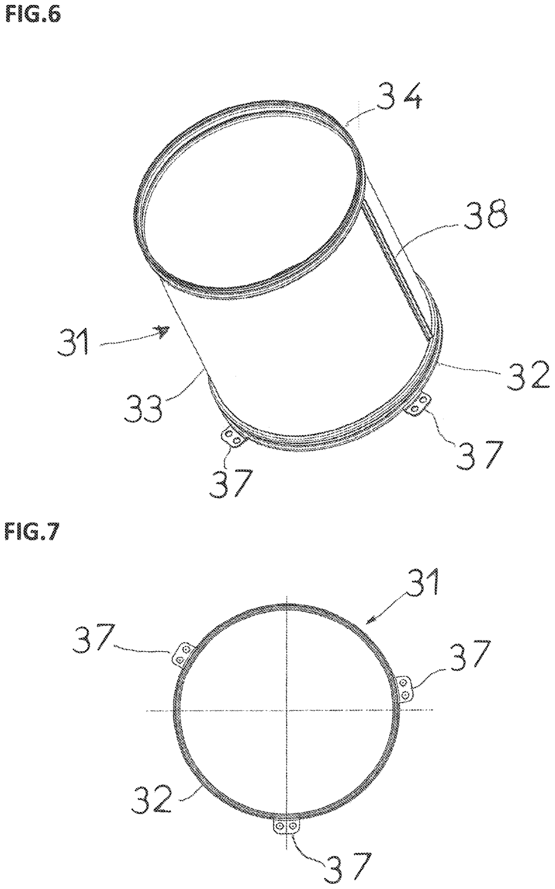

Ce rotor pourra comporter des aimants permanents, tels que des aimants en ferrite ou en terre rare implantés en V, de manière surfacique ou de manière radiale comme dans les figures 6 à 8 du document FR 3 005 906 auquel on se reportera. Le bobinage du stator 5 pourra comporter des bobines concentriques montées à isolation électrique sur les dents que comporte le corps du stator comme décrit dans ce document FR 3 005 906 (voir notamment figure 4). Comme décrit dans ce document le corps du stator pourra être continu ou fragmenté. Ce type de bobinage multiphasé -au moins du type triphasé- comporte un connecteur des phases et un neutre dont les extrémités sont reliées en étoile, comme visible par exemple à la figure 1 du document EP 0831 580. Ces extrémités pourront être reliées à un onduleur comme décrit par exemple dans les documents EP 0831 580 et FR 2 745 444 auxquels on se reportera. Les bobines montées à isolation électrique sur les dents du corps 10 s'étendent en saillie axiale de part et d'autre de ce corps pour former des chignons 8. En variante le bobinage du stator pourra être du type ondulé, à fils conducteurs continus ou à segments conducteurs comme décrit par exemple dans les documents FR 2 483 702 et EP 0881 742 auxquels on se reportera, ou du type imbriqué voir à pas raccourci. Dans tous les cas ces bobinages présentent des conducteurs électriques, par exemple en cuivre et/ou en aluminium, revêtus d'une couche d'isolation électrique. La résistance du bobinage du stator augmente avec la température de sorte qu'il faut refroidir le stator pour ne pas dégrader les performances de la machine 1.

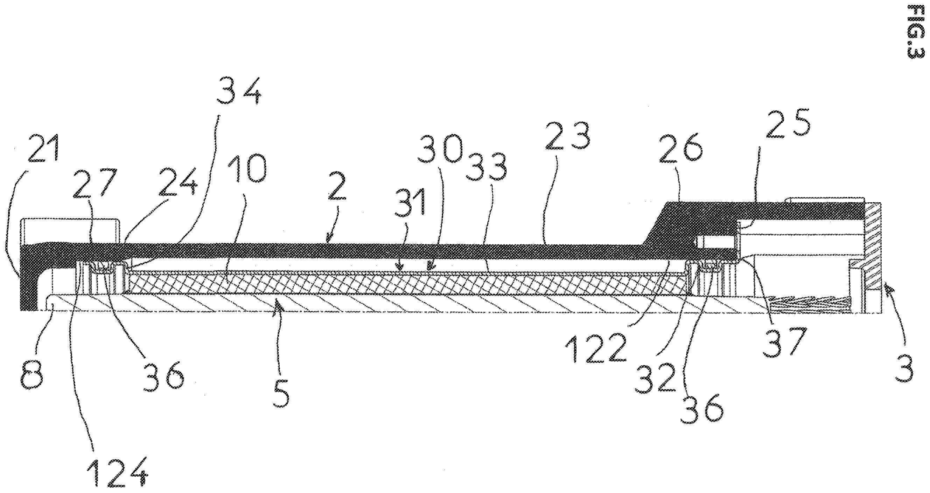

Le carter 2, 3 comporte également des pattes, dont les zones d'enracinement à la périphérie externe de la partie 2 du carter 2,3 sont visibles dans les figures 2 et 3. Les pattes servent à la fixation du carter 2, 3 et de la machine à une partie fixe d'un véhicule automobile. Ces pattes maintiennent axialement et angulairement la machine. Elles évitent toute rotation du stator 5 dans le flasque 2. De telles pattes sont visible par exemple dans le document WO 02/093717 précité auquel on se reportera. En variante les deux parties du carter 2, 3 peuvent être dotées de pattes. Dans encore une autre variante l'une au moins des pattes est remplacée par une platine de fixation.

La périphérie externe du carter 2, 3 pourra comporter une platine de montage d'un boîtier électronique contenant l'onduleur et son électronique de commande. En variante ce boîtier pourra être déporté, comme dans le document FR 2 745 444, avec présence de liaisons électrique par câble entre la machine 1 et ce boîtier électronique.

Le carter est également configuré centralement pour porter au moins un moyen de palier, tel qu'un roulement à billes, de montage à rotation de l'arbre du rotor.

Plus précisément le carter 2, 3 comporte un flasque avant 2 globalement en forme de pot fermé par le flasque arrière 3 formant un couvercle d'orientation transversale et globalement de forme globalement plate. Le flasque 2 (figure 2) présente un fond 21 globalement d'orientation transversale prolongé à sa périphérie externe par une jupe 22, 23, 24 annulaire d'orientation axiale qui pourra porter extérieurement le boîtier électronique de l'onduleur. L'extrémité libre de la jupe 22, 23, 24 est en contact avec la périphérie externe du flasque arrière 3. Le flasque 3 pourra être fixé à la jupe 22, 23, 24 par l'intermédiaire d'organes de fixation, tels que des vis traversant à la faveur de trous la périphérie externe du flasque 3 pour se visser dans des trous taraudés ménagés dans l'extrémité libre de la jupe 22, 23, 24. Cette extrémité libre du flasque 2 pourra être localement plus épaisse à cet effet. Ce flasque 3 pourra également être fixé à l'aide d'oreilles saillantes à trous taraudés de l'extrémité libre arrière du flasque 2 comme dans le document FR 2 782 356 ou à la faveur d'une collerette externe à trous taraudés de l'extrémité libre arrière du flasque 2.

Comme visible à la figure 2, les flasques 2, 3 sont troués centralement pour le passage de l'arbre de rotor 4 et présentent chacun un manchon (non référencé) dirigé vers l'intérieur du carter pour le montage de la bague externe d'un roulement à billes (non référencé à la figure 2). La bague interne des roulements à billes pourra être emmanchée dans l'extrémité correspondante de l'arbre 4. La bague externe de chaque roulement pourra être en appui sur le bord transversal du flasque concerné délimitant l'ouverture centrale de celui-ci.de centrage avec le corps du réducteur.

L'extrémité avant de l'arbre 4 est cannelée pour sa liaison à rotation avec un réducteur de vitesse non visible, le fond 21 présentant pour ce faire un anneau (non référencé) de centrage avec le corps du réducteur. L'extrémité arrière de l'arbre 4 est associée, de manière connue, à un résolveur pour suivre la rotation du rotor et envoyer des informations au boîtier électronique précité contenant l'électronique et l'onduleur de pilotage de la machine 1.

La machine 1 est dans ce mode de réalisation une machine de grande puissance associée au moteur thermique d'un véhicule hybride pour entraîner également les roues motrices du véhicule hybride. Cette machine réalise plusieurs fonctions notamment démarrer le moteur thermique suite à un arrêt de celui-ci au feu rouge, une fonction de freinage récupératif pour recharger une batterie lors du freinage du véhicule, une fonction de manoeuvre du véhicule lorsque celui-ci est au parking, une fonction pour éviter que le moteur thermique cale, une fonction d'assistance du moteur thermique notamment pour accélérer le véhicule hybride. Bien entendu, comme dans les démarreurs de véhicules automobiles, un dispositif de débrayage est prévu pour débrayer la machine électrique 1 par exemple lorsque la vitesse du véhicule hybride dépasse 130 km par heure.

La machine s'échauffe lorsqu'elle fonctionne. Il importe donc de bien refroidir celle-ci, notamment le stator de celle-ci pour augmenter ses performances et ne pas l'endommager. Ainsi la machine électrique du type précité comporte une chambre annulaire 30 de refroidissement de la machine délimitée par une paroi externe 23 et une paroi interne 33 pour réception d'un fluide caloporteur, son carter comportant au moins deux parties 2, 3 logeant un rotor interne 6. La chambre 30 est également appelée poche à eau.

La paroi externe 23 de la chambre de refroidissement 30 appartient à l'une des parties 2 du carter 2,3 en matière moulable, telle que de l'aluminium. Elle est dans cette réalisation annulaire et d'orientation axiale

La paroi interne 33 de la chambre 30 appartient à une pièce en acier 31 de plus faible épaisseur que la paroi externe 23;

La pièce en acier 31 est conformée pour présenter une zone de montage 33 du corps 10 du stator 5 et deux zones d'accostage 32, 34 portant chacune un joint d'étanchéité 36 en étant disposées de part et d'autre de la zone de montage 33 du corps du stator ;

L'une des zones d'accostage 32, dite première zone d'accostage, présente un diamètre externe supérieur à celui de l'autre zone d'accostage 34 dite deuxième zone d'accostage.

La paroi externe 23 en matière moulable est prolongée intérieurement à une extrémité par une première portée 122 destinée à coopérer avec le joint 36 de la première zone d'accostage 32 et à son autre extrémité par une marche 27 de diamètre interne inférieur au diamètre interne de la paroi externe 23, ladite marche formant à sa périphérie interne une deuxième portée 124 pour coopérer avec le joint d'étanchéité 36 de la deuxième zone d'accostage 34. Ainsi qu'il ressort de ce qui précède la marche 27 constitue une protubérance interne.

Le fluide caloporteur pourra être le liquide de refroidissement du moteur thermique du véhicule automobile hybride. Ce fluide caloporteur pourra servir également à refroidir le boîtier électronique précité contenant l'onduleur, notamment lorsque ce boîtier est porté par le carter 2, 3.

Grâce à ces dispositions la pièce en acier 31 permet, pour un même diamètre de la paroi externe, d'augmenter le diamètre externe du corps 10 globalement cylindrique du corps du stator 5 puisque la pièce en acier est moins épaisse que la paroi externe 23. Cette augmentation de diamètre permet d'augmenter la puissance de la machine électrique.

Cette pièce 31 est un bon conducteur de chaleur et constitue un dissipateur de chaleur, qui par l'intermédiaire de sa zone de montage 33 évacue la chaleur dégagée par le corps 10 du stator 5 en direction de la chambre 30 de refroidissement. La pièce en acier 31 pourra être obtenue par conformage d'une tôle d'acier, telle qu'une tôle d'acier fine d'épaisseur égale ou inférieure à 3 mm. De préférence cette tôle est une tôle à haute déformabilité permettant un étirage de celle-ci comme pour fabriquer des casseroles.

Ainsi on pourra utiliser une tôle d'acier à haute formabilité, telle qu'une tôle d'acier laminée à froid du type DC 04 selon la norme NF EN 10130. On pourra conformer cette tôle en découpant dans cette tôle un cercle puis par emboutissage profond on pourra étirer la matière de cette tôle pour former un tube, dont on déforme ensuite les extrémités par augmentation de diamètre pour former les zones d'accostage. On pourra utiliser des molettes pour former les zones d'accostage et un dispositif à poinçon et matrice pour étirer le métal. La pièce en acier 31 pourra ainsi avoir une épaisseur de 1 à 1,5 mm, tandis que l'épaisseur de la paroi externe 23 pourra être au moins de 4 mm. Cette disposition permet également de réduire le poids.

La paroi externe 23 pourra être avantageusement brute compte tenu de la différence de diamètre entre les zones d'accostage permettant de ménager les joints 36 de manière décrite ci-après. Cette disposition diminue le coût de la fabrication et augmente la fiabilité de la chambre 30, les fuites au niveau de la paroi 23 étant minimisées du fait que la paroi 23 n'est pas usinée.

De préférence la tôle d'acier pourra comporter un revêtement pour résister à la corrosion. On pourra utiliser par exemple une tôle d'acier revêtue d'une couche de Zinc par exemple de 10 microns, telle qu'une tôle d'acier DC 04 ZE. En variante on utilise une tôle en acier inoxydable. De même on pourra traiter la paroi externe, par exemple en aluminium, pour qu'elle résiste à la corrosion. En variante la pièce 31 pourra être une tôle d'acier inoxydable.

Le diamètre externe de la zone de montage 33 pourra être égal à celui de la deuxième zone d'accostage 34. Pour ce faire on pourra augmenter en conséquence l'épaisseur et diminuer le diamètre interne de la marche 27.

Avantageusement, pour augmenter le volume de la chambre cylindrique 30, le diamètre externe de la paroi de montage 33 du corps 10 du stator 5 pourra présenter un diamètre externe inférieur à celui des zones d'accostage 32, 34. Grâce à cette disposition la chambre 30 annulaire d'orientation axiale pourra avoir le volume souhaité, sachant qu'axialement et radialement ce volume est délimité par la paroi externe 23 et la zone interne de montage 33 en vis-à-vis. La réalisation de la pièce en acier 31 par conformage d'une tôle d'acier permet de faire varier aisément la hauteur radiale de la chambre en jouant sur le diamètre externe de la zone de montage 33. De plus cette disposition permet de diminuer l'épaisseur (la hauteur radiale) de la marche 27 et donc de diminuer le poids du flasque 2 du carter 2,3.

On notera que chaque portée 122, 124 présente une longueur axiale supérieure à celle de sa zone d'accostage 22, 24 associée en vis-à-vis et que le palier avant 2 peut être obtenu aisément par moulage. En effet le démoulage axial du flasque 2 est aisé puisque la marche 27 de la deuxième portée 124 à un diamètre interne inférieur à celui du diamètre interne de la paroi externe 23. Par rapport à la solution de la figure 1 on diminue les contraintes au niveau de la paroi externe 23.

L'étanchéité de la chambre 30 est fiable car le montage de la pièce en acier 31 à l'intérieur du flasque 2 est réalisé par enfilage axial d'avant en arrière de la pièce 31, le joint 36 de la deuxième zone d'accostage 34 étant ménagé puisqu'il vient en contact en final avec la deuxième portée 124 sans être dégradé par la paroi externe 23. En effet lors de l'enfilage axial ce joint 36 pourra ne pas être en contact avec la paroi 23 ou être en contact glissant avec la paroi externe 23 sans serrage notable. Ce n'est qu'à la fin de l'enfilage d'avant en arrière que les joints 36 sont sollicités et comprimés, le flasque arrière 3 étant fixé ultérieurement.

Les joints 36 sont donc ménagés.

Les zones d'accostage 32, 34 pourront avoir la même longueur axiale.

Comme visible dans la figure 4 chaque zone d'accostage 32, 34 comporte une rainure 138 de montage du joint 36 mieux visible à la figure 5. Ces rainures 138 s'étendent en saillie radialement vers l'intérieur et sont réalisées par exemple à l'aide de molettes comme le reste des zones 32, 34 de plus grand diamètre que celui du fond de la rainure 138. Les rainures 138 affectent ici globalement centralement les zones d'accostage et rigidifient les zones d'accostage 32, 34.

Ces rainures 138 présentent des flancs globalement parallèles et un fond plat annulaire.

De préférence les flancs sont inclinés faiblement pour dégagement de la molette de formation de la rainure 138.

La différence de rayon entre la première zone 32 et la deuxième zone 34 pourra être de 1 mm à 1,5 mm. La différence de rayon entre la deuxième zone d'accostage 34 et la zone de montage 33 pourra être au moins de 3 mm, tandis que la différence de rayon entre la première zone d'accostage 32 et la zone de montage 33 pourra être au moins de 4 ou 4,5 mm. Le diamètre interne de la zone de montage pourra être d'au moins 290 mm, tandis que ma longueur axiale de la zone 33 pourra être égale au moins à 89 mm et la distance axiale entre les rainures 138 pourra être au moins égale à 109 mm. Bien entendu cela dépend des applications, sachant que dans cet exemple la machine 1 présente une grande puissance.

Les joints 36 pourront être de préférence des joints toriques comme visible dans les figures 2 et 3.

Du fait de la faible différence de rayon entre les deux zones d'accostage 32, 34 les joints 36 peuvent être identiques, le joint 36 de la première zone 32 étant plus étiré que l'autre.

Dans ce mode de réalisation, comme visible dans les figures 2 et 3, la jupe 22, 23, 24 du flasque avant 2 présente plusieurs portions à savoir une portion cylindrique arrière 22 en contact à son extrémité libre arrière avec le flasque arrière 3, une portion cylindrique intermédiaire 23 et une portion avant 24. L'extrémité de la portion avant 24 se raccorde au fond 21 d'orientation transversale du flasque avant 2. C'est cette portion avant 24 qui comporte la marche 27 saillante radialement vers l'intérieur pour former à sa périphérie interne la deuxième portée 124. L'extrémité de cette marche est chanfreinée, ici arrondie, pour ne pas blesser le joint 36 de la zone d'accostage 34.

Le diamètre externe de la portion arrière 22 est supérieur au diamètre externe de la portion intermédiaire 23 de forme cylindrique. Cette portion intermédiaire 23 constitue la paroi externe de la chambre de refroidissement 30, ici de forme cylindrique.

Le flasque avant 2 est étagé intérieurement en diamètre. Ainsi le diamètre interne de la portion arrière 22 est supérieur au diamètre interne de la paroi externe 23, tandis que le diamètre interne de la marche 27 est inférieur au diamètre interne de la paroi 23.

On peut donc obtenir ces formes par démoulage axial.

La paroi externe 23 en matière moulable est prolongée intérieurement à une extrémité , son extrémité arrière dans cet exemple, par une première portée 122 destinée à coopérer avec le joint 36 de la première zone d'accostage 32 et à son autre extrémité, l'extrémité avant dans cet exemple, par une marche 27 de diamètre interne inférieur au diamètre interne de la paroi externe 23, ladite marche formant une deuxième portée 124 pour coopérer avec le joint d'étanchéité 36 de la deuxième zone d'accostage 34. La première portée 122 constitue donc un prolongement de la périphérie interne de la paroi externe 23.

La première zone d'accostage 32 (figures 2 et 3) est prolongée extérieurement à son extrémité libre par un rebord de fixation 37 d'orientation transversal saillant vers l'extérieur et destiné à être fixé à un épaulement transversal 25 délimitant l'extrémité interne de la première portion 22 du flasque 2. Cet épaulement 25 délimite également l'extrémité libre de la première portée 122 et est saillant vers l'extérieur.

L'épaulement 25 appartient à une protubérance externe sous la forme d'un supplément externe de matière 26 que présente la partie concernée du carter, ici le flasque avant 2. Ce supplément prolonge la portion arrière 22 et se raccorde à sa périphérie externe à la portion externe 23 par un chanfrein (figures 2 et 3). Ce supplément de matière 26, intercalé entre les portions 22, 23, présente intérieurement à sa périphérie interne une longueur axiale supérieure à celle de la première zone d'accostage 32.

L'épaulement 25 et le rebord 37 pourront être continus.

Le rebord de fixation 37 pourra consister en une pluralité de pattes 37. Le nombre de pattes 37 est égal ici à 3 (figure 7). Ces pattes 37 sont réparties circonférentiellement de manière régulière. Bien entendu le nombre de pattes 37 dépend des applications et peut donc être supérieur à trois ou égal à deux.

Les pattes 37 sont trouées pour leur fixation à l'épaulement 25 à l'aide d'organes de fixation, tels que des vis vissées dans des trous taraudés (non référencés) du supplément externe de matière 26, dont la longueur axiale dépend de la profondeur des trous taraudés.

Chaque patte 37 présente au moins un trou pour le passage de l'organe de fixation dont la tête vient en contact de serrage avec la face externe de la patte 37. Le nombre de trous dépend de la hauteur radiale de l'épaulement 25. Ici il est prévu deux trous par pattes (figure 7). Lorsque la hauteur radiale de l'épaulement est augmentée un seul trou pourra suffire, la tête de la vis de fixation pouvant être suffisamment grande.

Les portées 122, 124 appartiennent à des suppléments de matière 26, 27 de diamètre interne différents, l'un -le supplément 26- étant saillant vers l'extérieur et l'autre -la marche 27-étant saillant vers l'intérieur.

En variante, de manière avantageuse pour diminuer le poids, le supplément de matière 26, l'épaulement 25 et la portion 22 pourront être discontinus et appartenir à des bossages. Bien entendu la portée 122 est continue. Plus précisément la largeur circonférentielle de l'épaulement 25, du supplément de matière 26 et de la portion 22 pourront être égale au jeu de montage près à la longueur circonférentielle des pattes 37. La périphérie interne de la portion 22 pourra constituer un centreur pour la périphérie externe des pattes 37 à extrémités arrondies.

Grâce à cette disposition le flasque 2 forme avec la pièce en acier 31 un ensemble robuste, manipulable et transportable. On limite également le déplacement de la pièce 31 dans le flasque 2 par coopération des pattes 37 avec l'épaulement 25. Un bon positionnement des joints 36 est ainsi obtenu. Les zones d'accostage 32, 34 permettent un enfilage aisé de la pièce 31 dans la périphérie interne du flasque 2 fermé ultérieurement par le flasque 3.

Dans cet exemple le corps 10 cylindrique du stator est monté par frettage dans la zone de montage 33, la pièce 31 étant par exemple chauffée à cet effet puis se refroidie pour contact à serrage avec la périphérie externe du corps 10 cylindrique du stator 6, qui pourra être continu ou être segmenté. La pièce en acier 31 permet donc de bien évacuer la chaleur.

Le montage du corps 10 du stator dans la zone de montage 33 pourra être réalisé après ou avant enfilage de la pièce 31 dans le flasque 2.

Bien entendu le flasque 2 porte au niveau de la paroi 23 des tubulures d'entrée et d'évacuation (de sortie) du fluide caloporteur. Ces tubulures peuvent être venues de moulage avec le flasque ou être rapportées comme décrit dans le document FR 2 782 756 (voir figure 15). Les tubulures peuvent être coudées. La position de ces tubulures, appelées également conduits, dépend des applications. A la figure 2 on a schématisé par des flèches ces tubulures. Les tubulures pourront être venu de moulage avec le flasque avant 2 ou être rapportées sur le flasque 2 comme dans le document FR 2 782 356 précité (voir figure 15). Bien entendu un bouchon de vidange pourra être implanté dans la partie basse du flasque 2 comme visible à la figure 14 du document FR 2 782 356.

De manière précitée le fluide caloporteur pourra traverser le boîtier électronique, pour notamment refroidir l'onduleur, avant de pénétrer dans la chambre 30 via la tubulure d'entrée. En variante, notamment lorsque le boîtier électronique est déporté, le fluide caloporteur, ici le liquide de refroidissement du moteur thermique, sert uniquement à refroidir la chambre 30.

La zone de montage 33 de la pièce 31 pourra être avantageusement dotée d'une nervure 38 (figure 6) saillante en direction de la paroi externe formant un séparateur entre l'entée et l'évacuation du fluide caloporteur dans la chambre cylindrique 30. Dans cette figure 6 la nervure 38 est d'orientation axiale. En variante elle est inclinée axialement. Tout dépend des applications et de la position des tubulures. Les tubulures d'entrée et de sortie pourront être disposées de part et d'autre de la nervure 38. Elles pourront être décalées axialement comme schématisé à la figure 2. En variante la zone de montage 33 est dépourvue de nervure.

La pièce 31 permet donc d'obtenir de manière simple et économique de nombreuses fonctions. Elle permet de simplifier le flasque 2.

### Deuxième mode de réalisation

En variante pour réaliser la pièce en acier 31, on fait appel à un tube en acier de faible épaisseur dont on déforme et conforme en final les extrémités pour former les zones d'accostage par exemple à l'aide de molettes.

### Troisième mode de réalisation

En variante la pièce en acier 31 pourra être réalisée par emboutissage d'une tôle d'acier plate suivi d'une opération de roulage et soudage de la tôle d'acier de préférence d'épaisseur inférieure ou égale à 3 mm.

### Autres formes de réalisations

Le fluide caloporteur pourra être de l'huile ou un gaz.

Les zones d'accostage 32, 34 pourront avoir axialement des longueurs différentes.

Le décalage radial des zones d'accostage pourra être supérieur à 1, 5 mm de sorte que les joints toriques 36 pourront être de taille différente.

Bien entendu, dans un mode de réalisation moins favorable, les joints 36 pourront être des joints plats. L'un des joints 36, par exemple le joint de la première zone d'accostage, pourra être plat et l'autre torique.

Le supplément de matière 26 pourra être prolongé à sa périphérie externe de sorte que la paroi externe 23 pourra être plus épaisse.

En variante le flasque arrière 3, globalement de forme plate, pourra être usiné de sorte que le carter comportera dans tous les cas au moins une partie 2, celle délimitant la chambre 30, étant obtenue par moulage. L'autre partie pourra ne pas être en matière moulable. Elle pourra être en acier.

En variante on pourra inverser les structures de sorte que le flasque 3 deviendra le flasque avant traversé par l'arbre de rotor 4 et le flasque 2 le flasque arrière.

Le flasque arrière 3 pourra avoir une forme creuse et comporter à sa périphérie externe une jupe annulaire d'orientation axiale délimitant l'épaulement 25. Cette jupe du flasque 3 pourra remplacer la portion arrière 22 du flasque avant 2. En variante la portion arrière 22 pourra être plus courte et le flasque 2 pourra être moins long axialement. Dans tous les cas la jupe du flasque est fixée à la jupe 20, de manière connue, par exemple à l'aide de tirants. Cette jupe du flasque 3 libère de la place pour les têtes des vis de fixation du rebord 37.

L'extrémité libre de la jupe du flasque arrière pourra présenter intérieurement une surépais-seur pour constituer un plateau presseur immobilisant axialement les pattes 37 de la pièce 31 en contact avec l'épaulement 25.

Dans tous les cas on pourra doter cet épaulement 25 de creusures de réception des pattes 37 pour créer une liaison du type tenons-mortaises bloquant en rotation la pièce 31, les creusures étant de profondeur inférieure ou globalement égale à l'épaisseur des pattes 37.

Le carter 2, 3 pourra être étanche, le flasque et le fond 21 du flasque 2 étant fermé de sorte que le refroidissement est réalisé uniquement grâce à la chambre 30.

Ainsi de l'eau, de la boue, des poussières ou autres souillures ne peuvent pénétrer à l'intérieur du carter.

Le flasque 3 et le fond 21 du flasque 2 pourront comporter des ouvertures, l'une étant visible en 29 à la figure 2, de sorte que le refroidissement de la machine pourra être réalisé grâce au fluide caloporteur et grâce à une circulation de l'air à l'intérieur de la machine.

Le corps 10 du stator pourra être fixé par soudage à la zone de montage 33 du fait que la pièce 31 est en acier, qui est une matière soudable.

Le corps 10 du stator pourra être fixé à la zone de montage 33 par l'intermédiaire d'une couche de résine thermo conductrice de faible épaisseur formant dissipateur de chaleur.

De manière précitée le corps 10 du stator pourra être continu ou être fragmenté.

Le carter pourra comporter trois parties comme dans les documents FR 2 782 356 et FR 3 005 906 de sorte que la chambre 30 pourra être réalisée dans une entretoise intercalée axialement à fixation entre un flasque avant et un flasque arrière.

On pourra utiliser une tôle d'acier fine d'épaisseur inférieure ou égale à 3 mm plus épaisse ou moins épaisse que la tôle d'acier DC 04 ZE, telle que des tôles DC 03 ZE ou DC 05 ZE. On pourra également utiliser une tôle d'acier inoxydable ou une tôle d'acier fine laminée à chaud pour réaliser la pièce 31.

Le carter pourra être en fonte.

Bien entendu un capteur de température pourra être prévu pour mesurer la température des chignons 8 et arrêter la machine en cas de surchauffe du bobinage du stator.

### Applications

La machine électrique tournante à chambre 30 cylindrique pourra être intercalée entre le moteur thermique et la boîte de vitesse du véhicule automobile comme décrit dans les documents FR 2 782 356 et FR 3 005 906 précités. Cette machine pourra être intercalée entre deux embrayages.

Le rotor de la machine pourra être à aimants permanents, à pôles saillants ou à griffes. Des aimants permanents pourront être associés aux griffes ou aux pôles saillants.

La machine électrique pourra être plus puissante et appartenir à un véhicule électrique. Elle pourra constituer le moteur électrique du véhicule électrique.

La machine pourra être moins puissante. Ainsi la machine pourra consister en un alternateur, tel celui décrit dans le document WO 02/093717 précité à pont redresseur de courant alternatif en courant continu et rotor à griffes ou en alterno-démarreur à flasque arrière portant l'électronique de la machine via une mezzanine comme dans les documents WO 2006/129030 et WO2004/040738, Dans ce cas l'arbre de rotor pourra traverser le palier avant pour être solidaire d'une poulie reliée par une transmission à au moins une courroie à une poulie du vilebrequin du moteur thermique. Dans ces configurations c'est le flasque arrière de la machine qui est équipé de la paroi externe de la chambre de refroidissement en étant dépourvu de sortie d'air. On pourra dans ce type de réalisation conserver les ouvertures d'entrées d'air et remplacer les ventilateurs par des ventilateurs à action axiale, l'air traversant ainsi axialement le carter. Bien entendu on peut supprimer les ventilateurs, le rotor à griffes ou à pôles saillants permettant une circulation axiale de l'air.

Bien entendu l'électronique de la machine pourra être portée en variante par la jupe du flasque arrière.

La machine pourra être un moteur électrique à onduleur du type de celui décrit dans les documents EP 0831 580 et FR 2 745 444 précités.

La machine électrique pourra être un alternateur appartenant à un prolongateur d'économie d'un véhicule électrique. Dans ce cas l'arbre de rotor pourra être relié par une liaison à cannelures à un moteur thermique auxiliaire pour recharger les batteries du véhicule automobile.

Dans tous les cas la machine 1 pourra être implantée au plus près du moteur thermique.

## Revendications

1. Machine électrique tournante comportant un stator externe (5) doté d'un corps (10) portant un bobinage de stator, une chambre, notamment annulaire, de refroidissement de la machine (30) délimitée par une paroi externe (23) et une paroi interne (31) pour réception d'un fluide caloporteur et un carter (2, 3) comportant un flasque avant (2) en forme de pot et un flasque arrière (3) fermant le flasque avant (2), ledit carter logeant un rotor interne (6) dans laquelle:
- la paroi externe (23) de la chambre de refroidissement (30) est annulaire et formée dans le flasque avant (2) et est de préférence en matière moulable, telle que de l'aluminium ;
- la paroi interne de la chambre (30) appartient à une pièce, notamment en acier (31), de plus faible épaisseur que la paroi externe (23) ;
- la pièce (31) est conformée pour présenter une zone de montage (33) du corps (10) du stator (5) et deux zones d'accostage (22, 24) portant chacune un joint d'étanchéité (36) en étant disposées de part et d'autre de la zone de montage (33) du corps du stator ;
- l'une (22) des zones d'accostage (22, 24), dite première zone d'accostage, présente un diamètre externe supérieur à celui de l'autre zone d'accostage (24), dite deuxième zone d'accostage ;
- la paroi externe (23), notamment en matière moulable, est prolongée intérieurement à une extrémité par une première portée (122) de même diamètre intérieur que la paroi externe (23) et destinée à coopérer avec le joint (36) de la première zone d'accostage (22) et à son autre extrémité par une marche (27) de diamètre interne inférieur au diamètre interne de la paroi externe (23), ladite marche formant une deuxième portée (124) pour coopérer avec le joint d'étanchéité(36) de la deuxième zone d'accostage (24).

2. Machine selon la revendication 1, dans laquelle le diamètre externe de la zone de montage (33) est inférieur au diamètre externe des zones d'accostage (22, 24).

3. Machine selon la revendication 1ou 2, dans laquelle la longueur axiale de chaque portée (122, 124) est supérieure à la longueur axiale de sa zone d'accostage (22, 24) associée en vis à vis.

4. Machine selon l'une quelconque des revendications précédentes, dans laquelle chaque zone d'accostage (22, 24) présente une rainure (138) de réception d'un joint d'étanchéité.

5. Machine selon l'une quelconque des revendications précédentes, dans laquelle la zone de montage (33) présente une nervure (38) saillante en direction de la paroi externe (23) formant un séparateur entre l'entrée et l'évacuation du fluide caloporteur.

6. Machine selon l'une quelconque des revendications précédentes, dans laquelle la première zone d'accostage (32) est prolongée extérieurement à son extrémité libre par un rebord de fixation (37) d'orientation transversale saillant vers l'extérieur et destiné à être fixé à un épaulement transversal (25) délimitant l'extrémité libre de la première portée (122) de la partie concernée (2) du carter.

7. Machine selon la revendication 6, dans laquelle l'épaulement transversal (25) appartient à un supplément externe de matière (26) que présente la partie (2) concernée du carter.

8. Machine selon la revendication 7, dans laquelle le supplément externe de matière (26) présente des trous taraudés pour fixation du rebord de fixation (37) à l'aide d'organes de fixation tels que des vis.

9. Machine selon la revendication 8, dans laquelle le rebord de fixation (37 consiste en une pluralité de pattes (37) trouées pour leur fixation à l'épaulement (25) à l'aide des organes de fixation.

10. Machine selon l'une quelconque des revendications 6 à 9, dans laquelle le supplément de matière (26) est intercalé entre la paroi externe (23) et une zone d'extrémité (22) se raccordant à sa périphérie interne à l'épaulement transversal (25).

11. Machine selon l'une quelconque des revendications précédentes dans laquelle les joints (36) sont des joints toriques.

12. Machine selon l'une quelconque des revendications précédentes, dans laquelle le carter (2, 3) comporte un flasque avant (2) et un flasque arrière (3) et dans laquelle la chambre (30) appartient à l'un des flasques (2, 3).

13. Machine selon la revendication 12, dans laquelle la chambre (30) appartient au flasque avant (2) en forme de pot à jupe périphérique (22, 23, 24) fermée par un couvercle globalement de forme plate constituant le flasque arrière (3) et dans laquelle la paroi externe (23) appartient à la jupe (22, 23, 24) du flasque avant (2) étagée intérieurement en diamètre pour former la périphérie interne de la paroi externe (23) et les portée (22, 24).

14. Machine selon la revendication 13, dans laquelle le rotor (6) est solidaire d'un arbre (4) traversant le flasque avant (2) pour présenter une extrémité cannelée de liaison avec un réducteur de vitesse destiné à entraîner les roues motrices d'un véhicule hybride à moteur thermique.

## Patentansprüche

1. Rotierende elektrische Maschine, welche einen Außenstator (5), der mit einem eine Statorwicklung tragenden Körper (10) ausgestattet ist, eine insbesondere ringförmige Kühlkammer (30) der Maschine, die von einer Außenwand (23) und einer Innenwand (31) begrenzt wird, zur Aufnahme eines Wärmeträgerfluids und ein einen topfförmigen vorderen Lagerschild (2) und einen den vorderen Lagerschild (2) verschließenden hinteren Lagerschild (3) umfassendes Gehäuse (2, 3) umfasst, wobei das Gehäuse einen Innenrotor (6) aufnimmt, wobei:
- die Außenwand (23) der Kühlkammer (30) ringförmig und in dem vorderen Lagerschild (2) ausgebildet ist und vorzugsweise aus formbarem Material wie etwa Aluminium besteht;
- die Innenwand der Kammer (30) zu einem Teil (31), insbesondere aus Stahl, von geringerer Dicke als die Außenwand (23) gehört;
- das Teil (31) so ausgebildet ist, dass es einen Montagebereich (33) des Körpers (10) des Stators (5) und zwei Anlaufbereiche (22, 24), die jeweils eine Dichtung (36) tragen, wobei sie beiderseits des Montagebereichs (33) des Körpers des Stators angeordnet sind, aufweist;
- wobei einer (22) der Anlaufbereiche (22, 24), erster Anlaufbereich genannt, einen Außendurchmesser aufweist, der größer als derjenige des anderen Anlaufbereichs (24), zweiter Anlaufbereich genannt, ist;
- wobei die Außenwand (23), insbesondere aus formbarem Material, innen an einem Ende durch eine erste Auflagefläche (122) mit demselben Innendurchmesser wie die Außenwand (23) verlängert ist, die dazu bestimmt ist, mit der Dichtung (36) des ersten Anlaufbereichs (22) zusammenzuwirken, und an ihrem anderen Ende durch eine Stufe (27) mit einem Innendurchmesser, der kleiner als der Innendurchmesser der Außenwand (23) ist, wobei die Stufe eine zweite Auflagefläche (124) zum Zusammenwirken mit der Dichtung (36) des zweiten Anlaufbereichs (24) bildet.

2. Maschine nach Anspruch 1, wobei der Außendurchmesser des Montagebereichs (33) kleiner als der Außendurchmesser der Anlaufbereiche (22, 24) ist.

3. Maschine nach Anspruch 1 oder 2, wobei die axiale Länge jeder Auflagefläche (122, 124) größer als die axiale Länge ihres gegenüberliegend zugeordneten Anlaufbereichs (22, 24) ist.

4. Maschine nach einem der vorhergehenden Ansprüche, wobei jeder Anlaufbereich (22, 24) eine Nut (138) zur Aufnahme einer Dichtung aufweist.

5. Maschine nach einem der vorhergehenden Ansprüche, wobei der Montagebereich (33) eine in Richtung der Außenwand (23) vorstehende Rippe (38) aufweist, die ein Trennelement zwischen dem Einlass und dem Auslass des Wärmeträgerfluids bildet.

6. Maschine nach einem der vorhergehenden Ansprüche, wobei der erste Anlaufbereich (32) außen an seinem freien Ende durch einen quer ausgerichteten Befestigungsansatz (37) verlängert ist, der nach außen vorsteht und dazu bestimmt ist, an einem Querabsatz (25) befestigt zu werden, der das freie Ende der ersten Auflagefläche (122) des betreffenden Teils (2) des Gehäuses begrenzt.

7. Maschine nach Anspruch 6, wobei der Querabsatz (25) zu einem äußeren Materialzusatz (26) gehört, den der betreffende Teil (2) des Gehäuses aufweist.

8. Maschine nach Anspruch 7, wobei der äußere Materialzusatz (26) Gewindelöcher zur Befestigung des Befestigungsansatzes (37) mithilfe von Befestigungsorganen wie etwa Schrauben aufweist.

9. Maschine nach Anspruch 8, wobei der Befestigungsansatz (37) aus mehreren Laschen (37) besteht, die für ihre Befestigung am Absatz (25) mithilfe der Befestigungsorgane mit Löchern versehen sind.

10. Maschine nach einem der Ansprüche 6 bis 9, wobei der Materialzusatz (26) zwischen der Außenwand (23) und einem Endbereich (22), der sich an seinem Innenumfang an der Querabsatz (25) anschließt, angeordnet ist.

11. Maschine nach einem der vorhergehenden Ansprüche, wobei die Dichtungen (36) O-Ringe sind.

12. Maschine nach einem der vorhergehenden Ansprüche, wobei das Gehäuse (2, 3) einen vorderen Lagerschild (2) und einen hinteren Lagerschild (3) umfasst und wobei die Kammer (30) zu einem der Lagerschilde (2, 3) gehört.

13. Maschine nach Anspruch 12, wobei die Kammer (30) zu dem topfförmigen vorderen Lagerschild (2) mit einer Umfangsschürze (22, 23, 24) gehört, die durch einen im Wesentlichen plattenförmigen Deckel verschlossen ist, der den hinteren Lagerschild (3) bildet, und wobei die Außenwand (23) zu der Schürze (22, 23, 24) des vorderen Lagerschilds (2) gehört, die innen im Durchmesser gestuft ist, um den Innenumfang der Außenwand (23) und die Auflageflächen (22, 24) zu bilden.

14. Maschine nach Anspruch 13, wobei der Rotor (6) mit einer Welle (4) fest verbunden ist, die den vorderen Lagerschild (2) durchquert und ein längsgenutetes Ende zur Verbindung mit einem Untersetzungsgetriebe aufweist, das dazu bestimmt ist, die Antriebsräder eines Hybridfahrzeugs mit Verbrennungsmotor anzutreiben.

## Claims

1. Rotary electric machine comprising an external stator (5) provided with a body (10) bearing a stator winding, a chamber, which is in particular annular, for cooling the machine (30), said chamber being delimited by an external wall (23) and an internal wall (31) for receiving a heat-transfer fluid, and a casing (2, 3) comprising a pot-shaped front end plate (2) and a rear end plate (3) closing the front end plate (2), said casing housing an internal rotor (6), wherein:
- the external wall (23) of the cooling chamber (30) is annular and formed in the front end plate (2) and is preferably made of a mouldable material, such as aluminium;
- the internal wall of the chamber (30) belongs to a component, which is in particular made of steel (31), of smaller thickness than the external wall (23);
- the component (31) is shaped so as to have a mounting region (33) for mounting the body (10) of the stator (5) and two docking regions (22, 24) each bearing a gasket (36) and being arranged on either side of the mounting region (33) for mounting the body of the stator;
- one (22) of the docking regions (22, 24), referred to as first docking region, has an external diameter that is larger than that of the other docking region (24), referred to as second docking region;
- the external wall (23), which is in particular made of a mouldable material, is extended internally at one end by a first bearing surface (122) having the same inside diameter as the external wall (23) and intended to interact with the gasket (36) of the first docking region (22) and at its other end by a step (27) having an internal diameter that is smaller than the internal diameter of the external wall (23), said step forming a second bearing surface (124) for interacting with the gasket (36) of the second docking region (24).

2. Machine according to Claim 1, wherein the external diameter of the mounting region (33) is smaller than the external diameter of the docking regions (22, 24).

3. Machine according to Claim 1 or 2, wherein the axial length of each bearing surface (122, 124) is larger than the axial length of its associated facing docking region (22, 24).

4. Machine according to any one of the preceding claims, wherein each docking region (22, 24) has a groove (138) for receiving a gasket.

5. Machine according to any one of the preceding claims, wherein the mounting region (33) has a rib (38) protruding towards the external wall (23) and forming a separator between the inlet and the outlet for the heat-transfer fluid.

6. Machine according to any one of the preceding claims, wherein the first docking region (32) is extended externally at its free end by a transversely oriented fastening flange (37) protruding outwards and intended to be fastened to a transverse shoulder (25) delimiting the free end of the first bearing surface (122) of the relevant part (2) of the casing.

7. Machine according to Claim 6, wherein the transverse shoulder (25) belongs to additional external material (26) of the relevant part (2) of the casing.

8. Machine according to Claim 7, wherein the additional external material (26) has tapped holes for fastening the fastening flange (37) with the aid of fastening members such as screws.

9. Machine according to Claim 8, wherein the fastening flange (37) consists of a plurality of tabs (37) containing holes for fastening said tabs to the shoulder (25) with the aid of the fastening members.

10. Machine according to any one of Claims 6 to 9, wherein the additional material (26) is interposed between the external wall (23) and an end region (22) that is connected at its internal periphery to the transverse shoulder (25).

11. Machine according to any one of the preceding claims, wherein the gaskets (36) are O-rings.

12. Machine according to any one of the preceding claims, wherein the casing (2, 3) comprises a front end plate (2) and a rear end plate (3) and wherein the chamber (30) belongs to one of the end plates (2, 3).

13. Machine according to Claim 12, wherein the chamber (30) belongs to the pot-shaped front end plate (2) having a peripheral skirt (22, 23, 24) closed by a generally flat cover constituting the rear end plate (3) and wherein the external wall (23) belongs to the skirt (22, 23, 24) of the front end plate (2), said skirt being internally stepped in diameter in order to form the internal periphery of the external wall (23) and the bearing surfaces (22, 24).

14. Machine according to Claim 13, wherein the rotor (6) is secured to a shaft (4) passing through the front end plate (2) in order to have a splined end for connecting to a speed reducer intended to drive the drive wheels of a hybrid vehicle having a combustion engine.
